# EUROPÄISCHE PATENTANMELDUNG

(11) **EP 3 716 454 A1**
(43) Veröffentlichungstag der Anmeldung: **30.09.2020**
(21) Anmeldenummer: 20166171.7
(22) Anmeldetag: 27.03.2020
(51) Int. Cl.: H02K 11/33, H02K 11/35, H02K 7/116

(54) **GETRIEBEMOTOR**

(30) Priorität: 27.03.2019 DE 102019107901
(71) Anmelder: Lock Antriebstechnik GmbH, 88521 Ertingen (DE)
(72) Erfinder: Fluhr, Tobias, 88521 Ertingen (DE); Niederer, Patrick, 88499 Riedlingen-Zwiefaltendorf (DE); Lock, Frank, 88521 Ertingen (DE)
(74) Vertreter: Otten, Roth, Dobler & Partner mbB Patentanwälte

(57) **Zusammenfassung**

Getriebemotor bestehend aus einem Elektromotor und einem Getriebe, wobei der Elektromotor mit dem Getriebe gekoppelt ist, wobei eine Sensoreinheit vorhanden ist, welche zur Erfassung eines Betriebsparameters des Getriebemotors ausgebildet ist. Der Getriebemotor kennzeichnet sich dadurch, dass ein Elektroniksystem vorhanden ist, welches eine erste und eine zweite Kontrolleinheit umfasst, wobei die erste Kontrolleinheit zur Kontrolle des Elektromotors vorgesehen ist, wobei die zweite Kontrolleinheit die Sensoreinheit umfasst und dazu ausgelegt ist, einen Betriebsparameter des Getriebes zu erfassen, wobei Datenaustauschmittel vorhanden sind, sodass die erste und/oder die zweite Kontrolleinheit die von der zumindest zweiten Kontrolleinheit erfassten Betriebsparameter für eine Weiterverarbeitung speichern kann.

## Beschreibung

Getriebemotoren bestehend aus einem Elektromotor und einem Getriebe sind bekannt.

Ein bekannter Elektromotor umfasst eine Sensoreinheit, welche dazu ausgebildet ist, eine Bewegung einer Antriebswelle des Elektromotors und/oder einer Antriebswelle des Getriebes zu detektieren. Hierdurch lässt sich auf eine Bewegungslänge oder eine Position eines durch den Elektromotor angetriebenen Gegenstand rückschließen.

Nachteilig an den bekannten Getriebemotoren ist, dass anhand der verfügbaren Informationen keine Rückschlüsse auf einen Funktionszustand des Getriebemotors oder eines mit dem Getriebemotor angetriebenen Bauteils möglich sind.

### Aufgabe und Vorteile der Erfindung

Der Erfindung liegt die Aufgabe zugrunde, einen alternativen Getriebemotor bestehend aus einem Elektromotor und einem Getriebe bereitzustellen. Insbesondere einen Getriebemotor bereitzustellen, mittels welchem eine vergleichsweise effiziente Einbindung in Antriebs- und Regelsysteme erlaubt wird. Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einem Getriebemotor bestehend aus einem Elektromotor und einem Getriebe aus, wobei der Elektromotor mit dem Getriebe gekoppelt ist, wobei eine Sensoreinheit vorhanden ist, welche zur Erfassung eines Betriebsparameters des Getriebemotors ausgebildet ist.

Der Getriebemotor ist zum Beispiel dazu ausgebildet ein Bauelement zu bewegen. Das Bauelement positioniert und/oder verschiebt beispielsweise ein Antriebssystem zum Öffnen oder Schließen von Gebäudeöffnungen, wie z.B. Fenster, Dachöffnungen, Flügel oder flexible Wände, oder ein Antriebssystem zum Öffnen und Schließen von Schattierungs- oder Lüftungsanlagen oder zum Heben und Senken von Lasten. Denkbar ist auch, dass das Bauelement ein Antriebssystem zum Öffnen oder Schließen von Türen oder Tore antreibt. Das Bauelement kann auch Bestandteil eines solchen Antriebssystems sein.

Die Antriebssysteme werden beispielsweise im Gartenbau, im Stallbau und/oder im Glasbau, beispielsweise in Gewächshäusern, eingesetzt. Die Antriebssysteme zum Positionieren, insbesondere zum Heben und/oder Senken von Lasten finden unter anderem Verwendung im Maschinenbau.

Ein Betriebsparameter des Getriebes ist beispielsweise eine Position einer Welle des Getriebes, eine Lage der Welle des Getriebes, eine (Dreh-)Geschwindigkeit der Welle und/oder eine Drehrichtung der Welle. Ein Betriebsparameter kann auch ein Drehmoment sein. Beispielsweise ein Drehmoment, welches aufzubringen ist, um die Welle des Getriebes anzutreiben, beispielsweise ein Drehmoment pro Umdrehung der Welle des Getriebes oder Drehmoment pro Umdrehung pro Minute der Welle des Getriebes. Vorteilhafterweise wird ein Betriebsparameter einer äußeren Welle des Getriebes ermittelt. Die äußere Welle des Getriebes ist beispielsweise dazu ausgebildet ist, eine weitere, insbesondere eigenständige Welle anzutreiben. Zum Beispiel ist die äußere Welle des Getriebes mit einer weiteren Welle koppelbar. Die weitere, insbesondere eigenständige Welle, welche mit der äußeren Welle des Getriebes koppelbar ist, ist nicht Teil des Getriebemotors. Vorteilhafterweise ist die weitere Welle Teil eines Antriebssystems.

Vorteilhafterweise ist die Sensoreinheit dazu ausgebildet, einen Betriebsparameter eines drehangetriebenen Bauelements des Getriebemotors, z.B. des Getriebes, insbesondere einer Welle des Getriebemotors zu erfassen, z.B. eine Umdrehungszahl und/oder ein Drehmoment. Bevorzugterweise sind zwei, drei oder mehr Sensoreinheiten, insbesondere mehrere Sensoreinheiten, am Getriebemotor vorhanden.

Vorteilhafterweise ist die Sensoreinheit als ein Absolutmessgeber ausgebildet, welcher die Position eines drehangetriebenen Bauelements, insbesondere einer Welle des Getriebes ermitteln kann und/oder welcher die Position des drehangetriebenen Bauelements, insbesondere die Position einer Welle des Getriebes, insbesondere auch bei einem Stromausfall, detektiert. Beispielsweise ist die Sensoreinheit als ein Dehnmessstreifen und/oder als ein Wiegand-Sensor vorhanden. Ein Betriebsparameter ist z.B. ein Sensorwert des Absolutmessgebers. Der Absolutmessgeber kann eine Stellung eines drehangetriebenen Bauelements absolut erfassen. Vorteilhafterweise erfasst der Absolutmessgeber in jedem Betriebszustand, z.B. auch in einem von einem externen Stromnetz, bzw. von einem Stromspeicher entkoppelten, stromlosen Betriebszustand, eine Stellung des drehangetriebenen Bauelements absolut. Bevorzugterweise ist der Absolutmessgeber derart aufgebaut, dass er aufgrund einer Magnetfeldänderung eine Änderung der Stellung des drehangetriebenen Bauelements erfasst. Vorteilhafterweise erfasst der Absolutmessgeber eine einzige, insbesondere vollständige Umdrehung und/oder eine Vielzahl von Umdrehungen des drehangetriebenen Bauelements. Bevorzugterweise erfasst der Absolutmessgeber einen Teil einer Umdrehungen des drehangetriebenen Bauelements, insbesondere Teile einer Umdrehung des drehangetriebenen Bauelements, z.B. eine halbe Umdrehung.

Ein Betriebsparameter des Motors ist beispielsweise eine Stromstärke, eine Temperatur des Motors, eine Arbeitszeit des Motors und/oder Daten bzw. Werte einer Position des Motors, z.B. als GPS-Daten.

Der wesentliche Aspekt der Erfindung ist darin zu sehen, dass ein Elektroniksystem vorhanden ist, welches eine erste und eine zweite Kontrolleinheit umfasst, wobei die erste Kontrolleinheit zur Kontrolle des Elektromotors vorgesehen ist, wobei die zweite Kontrolleinheit die Sensoreinheit umfasst und dazu ausgelegt ist, einen Betriebsparameter des Getriebes zu erfassen, wobei Datenaustauschmittel vorhanden sind, sodass die erste und/oder die zweite Kontrolleinheit die von der zumindest zweiten Kontrolleinheit erfassten Betriebsparameter für eine Weiterverarbeitung speichern kann. Hierdurch ist die Erfassung eines Betriebszustands des Getriebemotors verbessert.

Eine Kontrolleinheit kann als eine insbesondere elektronische Recheneinheit, z.B. als ein Mikrokontroller, ausgebildet sein. Denkbar ist auch, dass die Kontrolleinheit, z.B. die erste Kontrolleinheit, als ein Prozessor, z.B. als ein kleiner Computer, beispielsweise als ein Ein-Chip-Computer, Mikrokontroller oder als ein Ein-Platinencomputer ausgestaltet ist, z.B. als Raspberry Pi. In einer vorteilhaften Ausbildung des Getriebemotors bilden die ersten und die zweite Kontrolleinheit eine Einheit. Z.B. sind die ersten und die zweite Kontrolleinheit auf einer einzigen Platine, z.B. als ein einziger Ein-Chip-Computer und/oder Mikrokontroller zusammengefasst vorhanden. Beispielsweise ist das Elektroniksystem als eine insbesondere einzige Recheneinheit, z.B. als ein einziger Ein-Chip-Computer und/oder als ein einziger Mikrokontroller ausgebildet, wobei sowohl die erste als auch die zweite Kontrolleinheit auf dem Ein-Chip-Computer und/oder auf dem Mikrokontroller vorhanden sind. Zum Beispiel ist das Elektroniksystem auf einer einzigen Platine, z.B. einer einzigen SMD-Leiterplatte, und/oder einem einzigen Mikrochip, z.B. einem einzigen SMD-Bauteil, angeordnet. Beispielsweise ist das Elektroniksystem und/oder die erste und/oder die zweite Kontrolleinheit als ein Halbleiterbauteil ausgebildet, insbesondere mit einem integrierten Schaltkreis.

Bevorzugterweise sind die Datenaustauschmittel derart vorhanden, dass die erste und/oder die zweite Kontrolleinheit die von der zumindest zweiten Kontrolleinheit erfassten Betriebsparameter für eine Weiterverarbeitung speichert, beispielsweise zwischenspeichert und insbesondere weiterverarbeitet.

Ein Datenaustauschmittel ist beispielsweise als eine insbesondere physische, beispielsweise elektrisch leitende Datenleitung ausgebildet, welche die beiden Kontrolleinheiten miteinander verbindet. Denkbar ist, dass die Datenleitung als eine kabellose Daten-Verbindung ausgebildet ist. Z.B. ist ein Datenaustauschmittel als ein Kabel, z.B. als ein Datenkabel vorhanden.

Der Getriebemotor, insbesondere der Elektromotor umfasst vorteilhafterweise einen Frequenzumrichter. Beispielsweise ist der Frequenzumrichter Bestandteil der ersten Kontrolleinheit. Der Elektromotor und das Getriebe sind bevorzugterweise in einem gemeinsamen bzw. einzigen Gehäuse untergebracht. Vorteilhafterweise umfasst das einzige Gehäuse auch den Frequenzumrichter. Denkbar ist auch, dass der Motor und das Getriebe zwei voneinander getrennte Gehäuse aufweisen. Beispielsweise sind der Motor und das Getriebe, insbesondere das Motorgehäuse und das Getriebegehäuse miteinander verbindbar ausgebildet, z.B. miteinander verschraubbar.

Weiter wird vorgeschlagen, dass die erste Kontrolleinheit eine weitere Sensoreinheit aufweist und die Sensoreinheit der ersten Kontrolleinheit zur Erfassung eines oder mehrerer, insbesondere verschiedener Betriebsparameter einer Antriebsseite des Getriebes ausgebildet ist. Hierdurch ist eine Betriebszustandsbestimmung des Getriebemotors verbessert.

Vorteilhafterweise sind mehrere Sensoreinheiten am Getriebemotor vorhanden, insbesondere an der ersten und/oder an der zweiten Kontrolleinheit. Beispielsweise umfasst zumindest eine Kontrolleinheit, zum Beispiel jede Kontrolleinheit, mehrere insbesondere verschiedene Sensoreinheiten. Zum Beispiel sind an zumindest einer Kontrolleinheit mehrere Sensoreinheiten integriert. Vorteilhafterweise ist eine Sensoreinheit dazu ausgelegt, einen Betriebsparameter des Elektromotors zu erfassen. Z.B. Strom-Frequenz, Umdrehungsfrequenz, Temperatur, Lage, Spannung und/oder Stromstärke des Elektromotors. Beispielsweise ist eine Sensoreinheit als ein Umdrehungssensor, als ein Stromsensor, als ein Spannungssensor, als ein Temperatursensor und/oder als ein Frequenzsensor ausgebildet. Beispielsweise umfasst der Getriebemotor, z.B. das Getriebe, einen Lagesensor.

Auch ist es von Vorteil, dass zumindest eine der beiden Kontrolleinheiten dazu ausgelegt ist, eine Daten-Auswertung der von der Sensoreinheit erfassten Betriebsparameter durchzuführen. Mit den Betriebsparametern werden beispielsweise Ist-Werte ermittelt. Zum Beispiel werden bei einer Daten-Auswertung die Ist-Werte mit Soll-Werten verglichen, wodurch Überschreitungen und/oder Unterschreitungen der Soll-Werte durch die Betriebsparameter ermittelbar sind. Hierdurch ist eine Intelligenz des Getriebemotors erhöht. Beispielsweise ist hierdurch eine Verschleißbestimmung des Getriebes, z.B. eine Bestimmung eines Spiels des Getriebes ermöglicht.

Beispielsweise ist die erste Kontrolleinheit, insbesondere ausschließlich die erste Kontrolleinheit, dazu ausgebildet, erfasste Betriebsparameter auszuwerten, z.B. von der Sensoreinheit, insbesondere von den Sensoreinheiten ermittelte Ist-Werte mit Soll-Werten zu vergleichen.

In einer vorteilhaften Ausführungsform des Getriebemotors ist die erste und/oder die zweite Kontrolleinheit dazu ausgebildet, auf Basis der Auswertung des erfassten Betriebsparameters, insbesondere auf Basis der erfassten Betriebsparameter, den Elektromotor zu schalten und/oder zu regeln.

Außerdem von Vorteil ist, dass der Getriebemotor eine insbesondere einzige Ausgangsschnittstelle aufweist, und der Getriebemotor dazu ausgebildet ist, dass eine externe Einheit über die Ausgangsschnittstelle auf vom Getriebemotor erfasste Betriebsparameter und/oder von einer Kontrolleinheit ermittelte Auswertungsdaten zugreifen kann.

Vorteilhafterweise umfasst zumindest eine der beiden Kontrolleinheiten eine Ausgangsschnittstelle. Durch die Ausgangsschnittstelle kann eine externe Einheit, z.B. ein Elektroniksystem eines weiteren Getriebemotors, auf die erfassten Betriebsparameter und/oder die Daten-Auswertung der ersten und/oder der zweiten Kontrolleinheit zugreifen. Bevorzugterweise sind die erste und/oder die zweite Kontrolleinheit dazu ausgebildet über die Ausgangsschnittstelle den erfassten Betriebsparameter und/oder die Daten-Auswertung der ersten und/oder zweiten Kontrolleinheit an die externe Einheit zu übermitteln.

Die Ausgangsschnittstelle ist z.B. als eine herkömmliche kabelgebundene und/oder kabellose Bus-Schnittstelle vorhanden. Zum Beispiel ist die Ausgangsschnittstelle als eine Ethernet-Schnittstelle, als eine WLAN-Schnittstelle, als eine Bluetooth-Schnittstelle, als eine I/O-Schnittstelle und/oder als eine NFC-Schnittstelle ausgebildet. Vorteilhafterweise umfasst der Getriebemotor mehrere, insbesondere verschiedene Ausgangsschnittstellen.

Von Vorteil erweist sich ebenfalls, dass die erste und/oder die zweite Kontrolleinheit eine insbesondere einzige Eingangsschnittstelle aufweist. Durch die Eingangsschnittstelle kann zumindest eine der beiden Kontrolleinheiten auf einen externen Betriebsparameter, insbesondere auf mehrere externe Betriebsparameter, zugreifen. Bevorzugterweise ist die erste und/oder die zweite Kontrolleinheit dazu ausgebildet über die Eingangsschnittstelle einen externen Betriebsparameter zu empfangen.

Ein externer Betriebsparameter ist z.B. ein Betriebsparameter, welche nicht von einem Sensor des Elektroniksystems ermittelbar ist. Unter einem externen Betriebsparameter werden z.B. Klimadaten und/oder Viehdaten verstanden. Klimadaten sind z.B. Raumtemperatur, externe Wetterdaten, Feuchtigkeitsdaten und/oder Luftzusammensetzung, usw. Viehdaten sind z.B. Vieh-Gewicht, Milchleistung des Viehs, Vieh-Stellplatz/-box-Nummer, Vieh-Fütterungszeiten, Vieh-Melkzeiten, usw.. Ein externer Betriebsparameter wird vorteilhafterweise von einer Einheit zur Verfügung gestellt, welche nicht Teil des Getriebemotors, insbesondere des Elektroniksystems des Getriebemotors ist. Beispielsweise ist unter einem externen Betriebsparameter ein von einem weiteren, insbesondere identischen Getriebemotor ermittelter Betriebsparameter zu verstehen.

Vorteilhafterweise sind die Ausgangsschnittstelle und die Eingangsschnittstelle insbesondere physisch identisch.

Überdies ist es von Vorteil, dass die erste und/oder die zweite Kontrolleinheit dazu ausgebildet ist, einen externen Betriebsparameter auszuwerten und auf Grundlage der Auswertung des externen Betriebsparameters den Elektromotor zu schalten und/oder zu regeln. Hierdurch ist beispielsweise eine NotAbschaltung und/oder ein Schutzmodus bei einer Fehlfunktion des Getriebemotors und/oder eines durch den Getriebemotor angetriebenen Antriebssystems realisierbar.

Vorteilhafterweise ist zumindest eine der beiden Kontrolleinheiten dazu ausgebildet, in Abhängigkeit von einem externen Betriebsparameter den Elektromotor zu schalten. Beispielsweise ist eine Kontrolleinheit dazu ausgebildet abhängig von einem externen Betriebsparameter den Getriebemotor abzuschalten und/oder in einen Schutzmodus zu versetzen.

Auch wird vorgeschlagen, dass das Elektroniksystem, insbesondere die erste und/oder die zweite Kontrolleinheit, dazu ausgestaltet ist, einen Schalt- und/oder Regelbefehl eines externen Computerprogramms zu empfangen und/oder auszuführen. Das externe Computerprogramm ist z.B. als ein Human-Machine-Interface-Computerprogramm (HMI) ausgebildet. Das HMI ist beispielsweise als eine App, z.B. eine Handy-App, ausgebildet. Das externe Computerprogramm löst beispielsweise ein Schaltsignal aus, z.B. eine Spannungsänderung, ein Spannungspuls oder ein Datenpaket, welches über die Datenaustauschmittel an die erste und/oder die zweite Kontrolleinheit übertragbar ist und wobei beispielsweise aufgrund des Schaltsignals die erste und/oder die zweite Kontrolleinheit einen Schalt- und/oder Regelbefehl ausführt und den Elektromotor schaltet oder regelt.

Weiter wird vorgeschlagen, dass das Elektroniksystem, insbesondere die erste und/oder die zweite Kontrolleinheit, dazu ausgestaltet ist, aufgrund eines ermittelten Betriebsparameters und/oder aufgrund der Daten-Auswertung, insbesondere über die Ausgangsschnittstelle, einen Schalt- und/oder Regelbefehl auszugeben. Beispielsweise ist hierdurch eine externe Komponente schaltbar, z.B. ein elektronischer Schalter. Beispielsweise ist das Elektroniksystem, insbesondere die erste und/oder die zweite Kontrolleinheit, dazu ausgestaltet, aufgrund einer durch die Daten-Auswertung ermittelten Überschreitungen und/oder Unterschreitungen eines Soll-Werts durch den Betriebsparameter, einen Schalt- und/oder Regelbefehl auszugeben.

Eine vorteilhafte Modifikation der Erfindung ist ein Getriebemotorsystem mit einem Getriebemotor nach einer der vorangegangen genannten Ausführungsformen, wobei das Getriebemotorsystem eine Elektronikeinheit aufweist, wobei die Elektronikeinheit durch die Eingangs- und/oder Ausgangsschnittstelle des Getriebemotors mit dem Getriebemotor verbindbar ist, wobei die Elektronikeinheit ein Computersystem mit einem Computerprogramm umfasst, wobei die Elektronikeinheit dazu ausgebildet ist, den Getriebemotor zu schalten und/oder zu regeln. Hierdurch ist eine externe bzw. vom Getriebemotor räumlich beabstandete, insbesondere automatische Steuerung des Getriebemotors realisiert.

Die Elektronikeinheit ist vorteilhafterweise am Getriebemotor anbringbar ausgebildet, z.B. am Getriebemotor angeordnet. Bevorzugterweise ist die Elektronikeinheit als eine vom Getriebemotor räumlich getrenntes Einheit vorhanden. Die Elektronikeinheit ist beispielsweise als ein Computer, Handy und/oder ein Tablet ausgebildet.

Überdies ist es von Vorteil, dass die Elektronikeinheit dazu ausgebildet ist, eine externe Eingabe eines Nutzers zu detektieren und auf Basis der Eingabe den Getriebemotor zu schalten und/oder zu regeln.

Ebenfalls erweist sich ein Antriebssystem mit einem Getriebemotor nach einer der vorangegangen beschriebenen Ausbildungen oder mit einem Getriebemotorsystem nach einer der vorangegangen beschriebenen Variante von Vorteil. In dem vorgeschlagenen Antriebssystem übernimmt ein Getriebemotor alleinstehend oder im Verbund mit weiteren insbesondere erfindungsgemäßen Getriebemotoren vorteilhafterweise eine Kontroll- und/oder Regelfunktion.

### Beschreibung eines Ausführungsbeispiels

Mehrere Ausführungsbeispiele werden anhand der nachstehenden Zeichnungen unter Angabe weiterer Einzelheiten und Vorteile näher erläutert:
Es zeigen:
- Figur 1: eine Draufsicht auf einen erfindungsgemäßen Getriebemotor und
- Figur 2: in einer schematischen Darstellung ein Antriebssystem umfassend zwei Getriebemotoren und eine Elektronikeinheit.

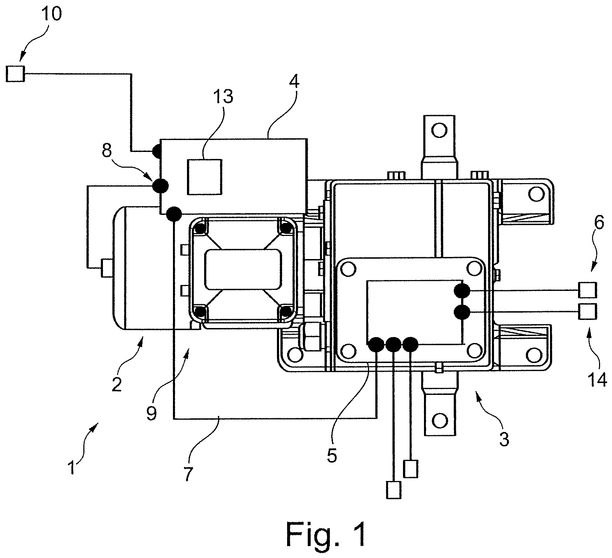

Figur 1 zeigt einen Getriebemotor 1 umfassend einen Elektromotor 2 und ein Getriebe 3. Z.B. ist am Elektromotor 2 eine erste Kontrolleinheit 4 vorhanden und am Getriebe 3 befindet sich beispielsweise eine zweite Kontrolleinheit 5. Die erste Kontrolleinheit 4 ist mittels eines Datenaustauschmittels 7, in Form beispielsweise eines Datenkabels, mit der zweiten Kontrolleinheit 5 verbunden. Die erste Kontrolleinheit 4 umfasst beispielsweise eine Sensoreinheit 8, welche beispielsweise einen Temperatursensor aufweist, um eine Temperatur einer Antriebsseite 9 des Getriebemotors 1, insbesondere des Elektromotors 2 zu detektieren bzw. zu messen. Denkbar ist auch, dass mehrere Temperatursensoren vorhanden sind. Die zweite Kontrolleinheit 5 umfasst eine Sensoreinheit 6 und z.B. eine weitere Sensoreinheit 14. Die Sensoreinheit 6 der zweiten Kontrolleinheit 5 umfasst beispielsweise einen Geschwindigkeitssensor, um zum Beispiel eine Rotationsgeschwindigkeit eines drehbeweglichen Elements des Getriebes 3 zu bestimmen. Beispielsweise einer Welle des Getriebes 3, welche mit einer anzutreibenden Komponente, welche nicht Teil des Getriebemotors 1 ist, koppelbar ist. Der Getriebemotor 1 umfasst weiterhin beispielsweise eine Eingangs- und/oder Ausgangsschnittstelle 10. Die Eingangs- und/oder Ausgangsschnittstelle 10 ist beispielsweise über ein Datenkabel mit einer der Kontrolleinheiten 4, 5 verbunden. In Figur 1 ist die Eingangs- und/oder Ausgangsschnittstelle 10 beispielsweise mit der ersten Kontrolleinheit 4 verbunden. Die Eingangs- und/oder Ausgangsschnittstelle 10 ist beispielsweise als eine physische Schnittstelle, zum Beispiel als eine Steckbuchse vorhanden. Außerdem vorteilhaft ist, dass der Getriebemotor 1 einen Frequenzumwandler 13 aufweist. Durch das Vorhandensein des Frequenzumwandlers 13 ist der Getriebemotor 1 flexibel in unterschiedlichen Stromnetzen zum Beispiel Europa oder USA einsetzbar und/oder regelbar.

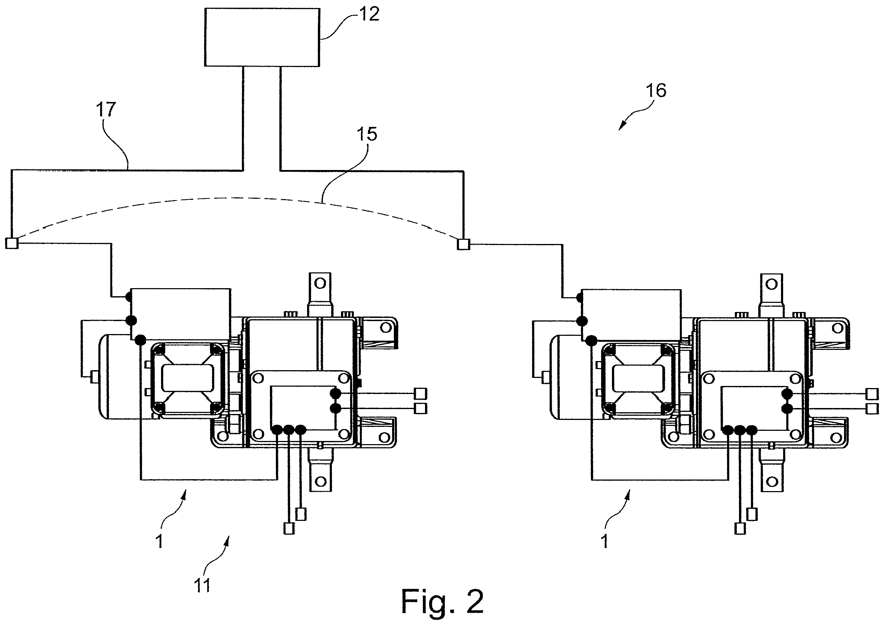

In Figur 2 sind zwei Getriebemotoren 1 und eine Elektronikeinheit 12 abgebildet. Ein Getriebemotor 1 und die Elektronikeinheit 12 bilden zusammen z.B. ein Getriebemotorsystem 11. Die Getriebemotoren 1 und die Elektronikeinheit 12 bilden zusammen z.B. ein Antriebssystem 16. Die Getriebemotoren 1 treiben beispielsweise voneinander getrennte Systeme an. Denkbar ist auch, dass die Getriebemotoren 1 ein System gemeinsam antreiben. Beispielsweise sind zwei Getriebemotoren 1 sich gegenüberliegend an einer Welle vorhanden, wobei beide Getriebemotoren 1 gemeinsam, insbesondere gleichzeitig die Welle antreiben. Vorteilhafterweise sind die Getriebemotoren 1 über ein Datenaustauschmittel 15 (gestrichelt dargestellt) miteinander gekoppelt. Das Datenaustauschmittel 15 ist beispielsweise als eine Funkverbindung vorhanden, z.B. eine Bluetooth-Verbindung oder eine WLAN-Verbindung. Die Elektronikeinheit 12 ist beispielsweise über ein Datenaustauschmittel 17 z.B. über die Eingangs- und/oder Ausgangsschnittstelle 10 mit einem Getriebemotor 1 oder mit den Getriebemotoren 1 verbunden.

### Bezugszeichenliste

- 1: Getriebemotor
- 2: Elektromotor
- 3: Getriebe
- 4: Kontrolleinheit
- 5: Kontrolleinheit
- 6: Sensoreinheit
- 7: Datenaustauschmittel
- 8: Sensoreinheit
- 9: Antriebsseite
- 10: Eingangsschnittstelle / Ausgangsschnittstelle
- 11: Getriebemotorsystem
- 12: Elektronikeinheit
- 13: Frequenzumrichter
- 14: Sensoreinheit
- 15: Datenaustauschmittel
- 16: Antriebssystem
- 17: Datenaustauschmittel

## Patentansprüche

1. Getriebemotor (1) bestehend aus einem Elektromotor (2) und einem Getriebe (3), wobei der Elektromotor (2) mit dem Getriebe (3) gekoppelt ist, wobei eine Sensoreinheit (6) vorhanden ist, welche zur Erfassung eines Betriebsparameters des Getriebemotors (1) ausgebildet ist,
**dadurch gekennzeichnet, dass**
ein Elektroniksystem vorhanden ist, welches eine erste und eine zweite Kontrolleinheit (4, 5) umfasst, wobei die erste Kontrolleinheit (4) zur Kontrolle des Elektromotors vorgesehen ist, wobei die zweite Kontrolleinheit (5) die Sensoreinheit (6) umfasst und dazu ausgelegt ist, einen Betriebsparameter des Getriebes (3) zu erfassen, wobei Datenaustauschmittel (7) vorhanden sind, sodass die erste und/oder die zweite Kontrolleinheit (4, 5) die von der zumindest zweiten Kontrolleinheit (5) erfassten Betriebsparameter für eine Weiterverarbeitung speichern kann.

2. Getriebemotor (1) nach einem der vorangegangenen Ansprüche, **dadurch gekennzeichnet, dass** die erste Kontrolleinheit (4) eine weitere Sensoreinheit (8) aufweist und die Sensoreinheit (8) der ersten Kontrolleinheit (4) zur Erfassung eines oder mehrerer Betriebsparameter einer Antriebsseite (9) des Getriebes (3) ausgebildet ist.

3. Getriebemotor (1) nach einem der vorangegangenen Ansprüche, **dadurch gekennzeichnet, dass** zumindest eine der beiden Kontrolleinheiten (4, 5) dazu ausgelegt ist, eine Daten-Auswertung der von der Sensoreinheit (6, 8) erfassten Betriebsparameter durchzuführen.

4. Getriebemotor (1) nach einem der vorangegangenen Ansprüche, **dadurch gekennzeichnet, dass** die erste und/oder die zweite Kontrolleinheit (4, 5) dazu ausgebildet ist, auf Basis der Auswertung des erfassten Betriebsparameters den Elektromotor (2) zu schalten und/oder zu regeln.

5. Getriebemotor (1) nach einem der vorangegangenen Ansprüche, **dadurch gekennzeichnet, dass** der Getriebemotor (1) eine Ausgangsschnittstelle (10) aufweist, und der Getriebemotor (1) dazu ausgebildet ist, dass eine externe Einheit über die Ausgangsschnittstelle (10) auf vom Getriebemotor (1) erfasste Betriebsparameter und/oder von einer Kontrolleinheit (4, 5) ermittelte Auswertungsdaten zugreifen kann.

6. Getriebemotor (1) nach einem der vorangegangenen Ansprüche, **dadurch gekennzeichnet, dass** die erste und/oder die zweite Kontrolleinheit (4, 5) eine Eingangsschnittstelle (10) aufweist, wodurch zumindest eine der beiden Kontrolleinheiten (4, 5) auf einen externen Betriebsparameter zugreifen kann.

7. Getriebemotor (1) nach einem der vorangegangenen Ansprüche, **dadurch gekennzeichnet, dass** die erste und/oder die zweite Kontrolleinheit (4, 5) dazu ausgebildet ist, einen externen Betriebsparameter auszuwerten und auf Grundlage der Auswertung des externen Betriebsparameters den Elektromotor (2) zu schalten und/oder zu regeln.

8. Getriebemotor (1) nach einem der vorangegangenen Ansprüche, **dadurch gekennzeichnet, dass** das Elektroniksystem, insbesondere die erste und/oder die zweite Kontrolleinheit (4, 5), dazu ausgestaltet ist, einen Schalt- und/oder Regelbefehl eines externen Computerprogramms zu empfangen und/oder auszuführen.

9. Getriebemotorsystem (11) mit einem Getriebemotor (1) nach einem der vorangegangenen Ansprüche, **dadurch gekennzeichnet, dass** das Getriebemotorsystem (11) eine Elektronikeinheit (12) aufweist, wobei die Elektronikeinheit (12) durch die Eingangs- und/oder Ausgangsschnittstelle (10) des Getriebemotors (1) mit dem Getriebemotor (1) verbindbar ist, wobei die Elektronikeinheit (12) ein Computersystem mit einem Computerprogramm umfasst, wobei die Elektronikeinheit (12) dazu ausgebildet ist, den Getriebemotor (1) zu schalten und/oder zu regeln.

10. Getriebemotorsystem (11) nach dem vorangegangenen Anspruch 9, **dadurch gekennzeichnet, dass** die Elektronikeinheit (12) dazu ausgebildet ist, eine externe Eingabe eines Nutzers zu detektieren und auf Basis der Eingabe den Getriebemotor (1) zu schalten und/oder zu regeln.

11. Antriebssystem (16) mit einem Getriebemotor (1) nach einem der vorangegangenen Ansprüche 1 bis 8 oder einem Getriebemotorsystem (11) nach einem der vorangegangenen Ansprüche 9 oder 10.
